# EUROPEAN PATENT APPLICATION

(11) **EP 4 276 974 A1**
(43) Date of publication of application: **15.11.2023**
(21) Application number: 22172367.9
(22) Date of filing: 09.05.2022
(51) Int. Cl.: H01M 10/48, H01M 10/625, H01M 10/63, H01M 10/651, H01M 10/6556, H01M 50/213, H01M 50/242, H01M 50/249, H01M 10/643

(54) **A COOLING SYSTEM FOR ONE OR MORE BATTERY CELLS OF AN ELECTRIC BATTERY**

(71) Applicant: VOLVO TRUCK CORPORATION, 405 08 Göteborg (SE)
(72) Inventor: Bas, Ahmet, 417 22 Göteborg (SE)
(74) Representative: Valea AB

(57) **Abstract**

The disclosure relates to a cooling system (1) for one or more battery cells (C1,...,Cn) of an electric battery (100), comprising:
- a cooling conduit (10) for coolant fluid, wherein the cooling conduit (10) is arranged for cooling of at least one battery cell (C1) of the electric battery (100), characterized in that, the cooling conduit (10) has a variable dimension being indicative of a variable amount of coolant fluid to flow in the cooling conduit (10), and
the variable dimension of the cooling conduit is variable in dependence on a cell swelling mechanism of the at least one battery cell (C1). The disclosure also relates to an electric battery (100) and a vehicle (200).

## Description

### TECHNICAL FIELD

The invention relates to a cooling system for one or more battery cells of an electric battery. The invention also relates to an electric battery and to a vehicle.

The invention can be applied in heavy-duty vehicles, such as trucks, buses and construction equipment. Although the invention will be described with respect to a truck, the invention is not restricted to this particular vehicle, but may also be used in other vehicles such as passenger cars. Furthermore, the invention is not restricted to vehicles, but may be used for any other application where battery cooling is desired.

### BACKGROUND

The automotive industry is currently undergoing a rapid change towards more electrified vehicles. In recent years, hybrid vehicles and also pure electric vehicles have become more popular. This trend is also seen for larger vehicles, such as heavy-duty trucks, buses and construction equipment.

Electric energy for vehicle propulsion may for example be stored in an electric battery which comprises a plurality of battery cells, such as lithium-ion battery cells.

During use, the temperature of the battery cells increases. The temperature increase may reduce the battery performance and therefore there may be a need to cool the battery cells during use. In cold conditions it may also be a need to heat the battery cells before and/or during use.

As such, it is known to equip an electric battery with a cooling system for cooling and/or heating the battery cells. Even though it is known to cool electric batteries during use, there is a strive to develop further improved technology relating to cooling of electric batteries and battery cells.

### SUMMARY

In view of the above, an object of the invention is to provide an improved cooling system for one or more battery cells of an electric battery, or at least to provide a suitable alternative. Other objects of the invention are to provide an improved electric battery and an improved vehicle, or at least to provide suitable alternatives.

According to a first aspect of the invention, the object is at least partly achieved by a cooling system according to claim 1.

Hence, there is provided a cooling system for one or more battery cells of an electric battery. The cooling system comprises a cooling conduit for coolant fluid. The cooling conduit is arranged for cooling of at least one battery cell of the electric battery. The cooling conduit has a variable dimension which is indicative of a variable amount of coolant fluid to flow in the cooling conduit, and the variable dimension of the cooling conduit is variable in dependence on a cell swelling mechanism of the at least one battery cell.

By the provision of a cooling system as disclosed herein, improved cooling of the electric battery is achieved. More specifically, the present invention is based on a realization to make use of the cell swelling mechanism for varying the cooling during the lifetime of the battery cell. A battery cell will generally require more cooling when it degrades and/or ages in order to function properly. As such, it has been realized that the cell swelling mechanism can be used for providing improved cooling since the cell swelling mechanism is dependent on degradation and/or aging of the battery cell. Varying the cooling during the lifetime of the battery cell implies increased performance and/or service life of the battery cell. The invention may also result in improved temperature/cooling distribution between a plurality of battery cells since the cooling can be tailored for each battery cell and its specific needs during use. More particularly, battery cell degradation may vary between different battery cells of an electric battery. This in turn will result in varying cell swelling between the battery cells. As such, by the provision of the present invention, the varying cell swelling will provide a varying cooling between the battery cells.

By cell swelling mechanism of a battery cell is herein meant that the volume occupied by the battery cell is increased as a consequence of degradation and/or aging of the battery cell. In other words, the dimension of the battery cell is increased, and/or the proportions of the battery cell are changed, when it swells.

The coolant fluid may be any type of fluid for cooling/heating one or more battery cells, such as water and air. For example, the coolant fluid may be water comprising an additive, such as an antifreeze additive and/or an anticorrosion additive. For example, the additive may be ethylene glycol or any other type of antifreeze additive.

The cooling system may additionally be used for heating the at least one battery cell. The cooling and/or heating may be performed during, before and/or after use of the electric battery.

Preferably, the variable dimension of the cooling conduit is variable so that it increases with increased cell swelling of the at least one battery cell. An increase of the variable dimension is indicative of an increased flow amount of coolant fluid in the cooling conduit. Thereby, more coolant fluid is allowed to pass by the at least one battery cell after it has swelled.

Optionally, the cooling system further comprises a main channel for coolant fluid, wherein the cooling conduit is in fluid communication with the main channel or fluidly connectable with the main channel in dependence on the cell swelling mechanism. The main channel may be used for distributing coolant fluid to more than one battery cell of the electric battery.

Optionally, the fluid communication between the main channel and the cooling conduit is provided in that the cooling conduit is at least partly provided inside the main channel. This implies a compact, reliable and efficient configuration for transferring coolant fluid from the main channel to the cooling conduit.

Still optionally, the increase of the variable dimension is achieved by the cooling conduit being pressed further into the main channel as a consequence of the cell swelling. This also implies a compact, reliable and efficient configuration for transferring coolant fluid from the main channel to the cooling conduit.

Optionally, the increase of the variable dimension is configured to be performed in a direction which is different from a flow direction of the coolant fluid in the main channel, such as substantially perpendicular to the flow direction of the coolant fluid in the main channel. This implies a relatively large dimension change of the variable dimension as a consequence of the cell swelling. As such, further improved cooling is achieved.

Optionally, the at least one battery cell which is associated with the cooling conduit has a bottom surface, a top surface and a side surface, wherein the variable dimension of the cooling conduit is variable in dependence on a cell swelling mechanism occurring at the side surface of the at least one battery cell. Still optionally, the variable dimension of the cooling conduit is additionally or alternatively variable in dependence on a cell swelling mechanism occurring at the bottom and/or top surface of the at least one battery cell.

Optionally, the dimension change of the variable dimension is configured to be performed by the at least one battery cell pushing directly or indirectly on the cooling conduit.

According to a second aspect of the invention, the object is at least partly achieved by an electric battery according to claim 10.

Hence, there is provided an electric battery comprising one or more battery cells, and further comprising a cooling system according to any one of the embodiments of the first aspect of the invention.

Advantages and effects of the second aspect of the invention are analogous to the advantages and effects of the first aspect of the invention. It shall also be noted that all embodiments of the first aspect of the invention are combinable with all embodiments of the second aspect of the invention, and vice versa.

Optionally, the cooling conduit is connected to the at least one battery cell by at least one of the following: glue, a spring, a clip.

Optionally, the cooling system comprises a plurality of variable cooling conduits, i.e. variable cooling conduits with a variable dimension as disclosed herein, each one being associated with at least one respective battery cell. This implies improved cooling/temperature distribution between the battery cells.

Optionally, the plurality of variable cooling conduits are associated with a first group of battery cells and the cooling system further comprises one or more non-variable cooling conduits associated with a second group of battery cells. By a non-variable cooling conduit is intended a cooling conduit which does not have a variable dimension for varying a flow amount of coolant fluid therein. The first group of battery cells may be at least one of the following: battery cells in a corner of the electric battery, battery cells at a front portion of the electric battery and battery cells at a top portion of the electric battery. A front portion may be a front portion with respect of a front of a vehicle in which the electric battery is used. It has further been realized that cells in a corner, at the front portion and/or at the top portion may be more susceptible to degradation and may hence require more cooling during the service life of the electric battery. As such, by the present invention, these battery cells will be cooled more, thereby improving the cooling/temperature distribution among the battery cells.

According to a third aspect of the invention, the object is at least partly achieved by a vehicle according to claim 14.

Hence, there is provided a vehicle comprising an electric battery according to any one of the embodiments of the second aspect of the invention.

Advantages and effects of the third aspect of the invention are analogous to the advantages and effects of the first and second aspects of the invention. It shall also be noted that all embodiments of the first and second aspects of the invention are combinable with all embodiments of the third aspect of the invention, and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the present invention,
Fig. 2 is a schematic and perspective view of a cooling system for one or more battery cells of an electric battery according to an example embodiment of the present invention,
Figs. 3a-b are schematic and sectional views of the cooling system as shown in fig. 2,
Fig. 4 is a schematic and sectional view of an electric battery according to an example embodiment of the present invention,
Fig. 5 is a schematic and perspective view of a cooling system according to another embodiment of the present invention, and
Figs. 6a-b are schematic and sectional views of the cooling system as shown in fig. 5.

The drawings show diagrammatic exemplifying embodiments of the present disclosure and are thus not necessarily drawn to scale. It shall be understood that the embodiments shown and described are exemplifying and that the disclosure is not limited to these embodiments. It shall also be noted that some details in the drawings may be exaggerated in order to better describe and illustrate the disclosure. Like reference characters refer to like elements throughout the description, unless expressed otherwise.

### DETAILED DESCRIPTION OF EXAMPLE EMBODIMENTS OF THE INVENTION

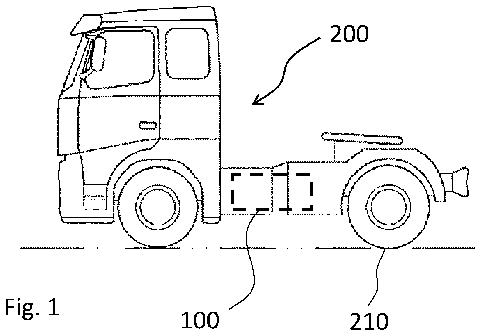

Fig. 1 depicts a vehicle 200 according to an example embodiment of the present invention. The vehicle 200 is herein a heavy-duty truck, more specifically a towing truck for towing one or more trailers (not shown). However, the invention is not limited to only this type of vehicle, but may also be used for other vehicles, such as buses, work machines, passenger cars etc. The invention is also applicable to marine applications, and to any other application where battery cooling is desired.

The vehicle 200 comprises an electric battery 100 for powering one or more electric motors (not shown) of the vehicle 100. The electric battery 100 comprises a plurality of battery cells C1,..., Cn (not shown in this figure), such as several hundreds or several thousands of battery cells. The one or more electric motors are mechanically connected to drive wheels 210, or any other type of ground engaging members, for generating a propulsion force to the vehicle 200.

The vehicle 200 may be a pure electric vehicle or a hybrid vehicle, e.g. a vehicle comprising an internal combustion engine in addition to the one or more electric motors.

The one or more electric motors are also typically used as electric generators for charging the electric battery 100, such as when driving in downhill slopes.

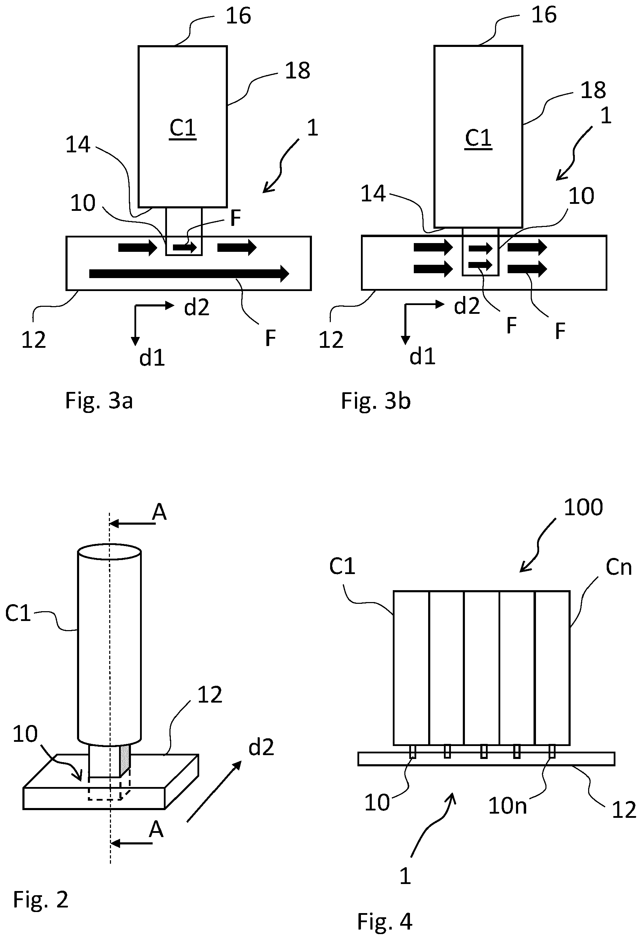

Fig. 2 shows a schematic and perspective view of a cooling system 1 according to an example embodiment of the present invention. Figs. 3a-3b show sectional views of the cooling system 1 along section A-A as shown in fig. 2.

A battery cell C1 is also shown in figs. 2-3. The battery cell C1 may be a battery cell of the electric battery 100 as shown in fig. 1. As shown in fig. 2, the battery cell C1 may have a substantially cylindrical shape.

The cooling system 1 comprises a cooling conduit 10 for coolant fluid. The cooling conduit 10 is arranged for cooling of the battery cell C1 of the electric battery 100. The cooling conduit 10 has a variable dimension which is indicative of a variable amount of coolant fluid to flow in the cooling conduit 10, and the variable dimension of the cooling conduit 10 is variable in dependence on a cell swelling mechanism of the battery cell C1.

In the shown embodiment, the coolant fluid is configured to flow in a flow F, represented by the flow arrows in figs. 3a-b. Fig. 3a represents a situation when the battery cell C1 has not swelled and fig. 3b represents a situation when the battery cell C1 has swelled as a consequence of degradation and/or aging of the battery cell C1.

As shown, the variable dimension of the cooling conduit 10 may be variable so that it increases with increased cell swelling of the battery cell C1. More specifically, a larger amount of coolant fluid can flow in the cooling conduit 10 when the battery cell C1 has swelled, as indicated by the two flow arrows F in the cooling conduit 10 as shown in fig. 3b, compared to only one flow arrow F in the cooling conduit 10 as shown in fig. 3a. Thereby, more cooling of the battery cell C1 can be achieved when the battery cell C1 has swelled to occupy a larger volume.

As shown in figs. 2-3, the cooling system 1 may further comprise a main channel 12 for the coolant fluid. The main channel 12 may in an example embodiment be denoted a heat sink. The cooling conduit 10 is in fluid communication with the main channel 12.

For example, the increase of the variable dimension may be defined as an increase in size of an opening (not shown) of the cooling conduit 10, wherein the opening provides the fluid communication between the main channel 12 and the cooling conduit 10. Additionally, or alternatively, the increase of the variable dimension may be defined as an increase in volume of the cooling conduit 10.

The fluid communication between the main channel 12 and the cooling conduit 10 may as shown be provided in that the cooling conduit 10 is at least partly provided inside the main channel 12. For example, as shown, the increase of the variable dimension may be achieved by the cooling conduit 10 being pressed further into the main channel 12 as a consequence of the cell swelling.

The increase of the variable dimension may as further shown be configured to be performed in a direction d1 which is different from a flow direction d2 of the coolant fluid in the main channel 12. In the shown embodiment, the direction d1 is substantially perpendicular to the flow direction d2 of the coolant fluid in the main channel 12.

By way of example, the cylindrically shaped battery cell C1 may have a height in the range of 5-15 centimetres (cm) and a diameter in the range of 1-5 cm. For example, the cell swelling mechanism may correspond to an increase in diameter and/or height in the range of 1-5 millimetres (mm).

The battery cell C1 which is associated with the cooling conduit 10 has a bottom surface 14, a top surface 16 and a side surface 18. In the embodiment shown in figs. 2-3, the variable dimension of the cooling conduit 10 is variable in dependence on a cell swelling mechanism occurring at the bottom surface 14 of the battery cell C1. As shown, the dimension change of the variable dimension may be configured to be performed by the at least one battery cell C1 pushing directly on the cooling conduit 10. Alternatively, another element (not shown) may be provided in-between the battery cell C1 and the cooling conduit 10. Accordingly, the dimension change of the variable dimension may be configured to be performed by the at least one battery cell C1 pushing indirectly on the cooling conduit 10.

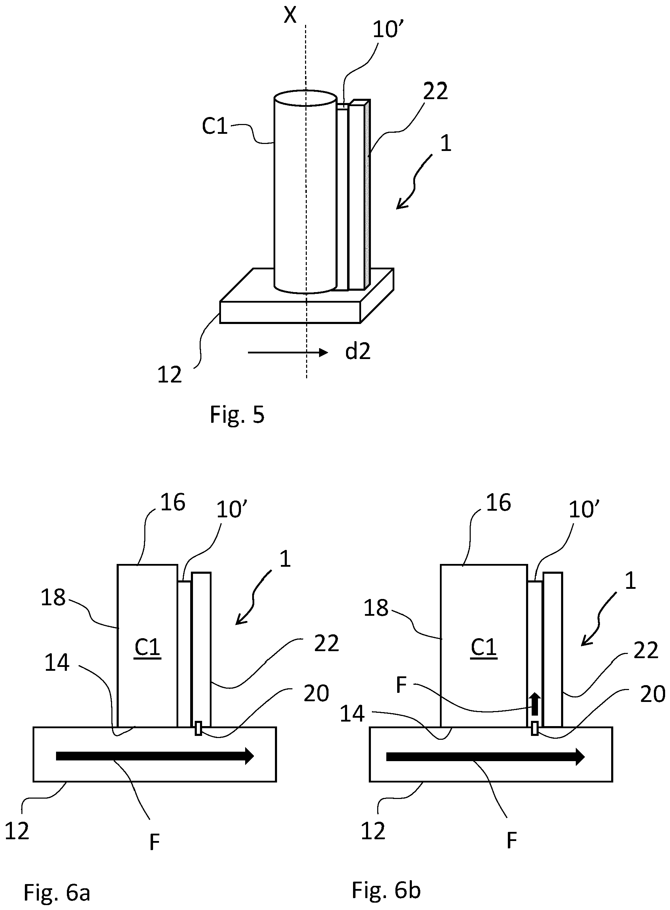

Figs. 5-6 show an alternative example embodiment of the present invention. It shall be noted that the embodiments shown in figs. 2-6 may be combined. Fig. 5 shows a cooling system 1 and a battery cell C1 in perspective view, and figs. 6a-b show the cooling system 1 and the battery cell C1 in a section along a longitudinal axis X of the battery cell C1 as shown in fig. 5. Similar to the embodiment described with reference to figs. 2-3, the cooling system 1 as shown in figs. 5-6 comprises a cooling conduit 10' which also is arranged for cooling the battery cell C1. In addition, the cooling conduit 10' has a variable dimension which is indicative of a variable amount of coolant fluid to flow in the cooling conduit 10', and the variable dimension of the cooling conduit 10' is variable in dependence on a cell swelling mechanism of the at least one battery cell C1. The variable dimension may be variable so that it increases with increased cell swelling of the battery cell C1. More particularly, in the shown embodiment, the dimension increase of the variable dimension may be defined as an increase in size of an opening 20 of the cooling conduit 10', wherein the opening 20 provides the fluid communication between the main channel 12 and the cooling conduit 10.

As shown, the cooling conduit 10' may be fluidly connectable with the main channel 12. In fig. 6a, depicting a situation when the battery cell C1 has not swelled, the cooling conduit 10' is fluidly disconnected with respect to the main channel 12. This is indicated in that the opening 20 is blocked by a blocking element 22. However, as shown in fig. 6b, depicting a situation when the battery cell C1 has swelled to a predefined degree, the cooling conduit 10' is fluidly connected to the main channel 12 via the opening 20. As a result, a flow F of coolant fluid can enter the cooling conduit 10' via the opening 20. The dimension change of the variable dimension, in this case the dimension increase of the size of the opening 20, is performed by the battery cell C1 pushing directly on the cooling conduit 10'.

In the embodiment shown in figs. 5-6, the variable dimension of the cooling conduit 10 is variable in dependence on a cell swelling mechanism occurring at the side surface 18 of the battery cell C1. As shown, the dimension change of the variable dimension may be configured to be performed by the at least one battery cell C1 pushing directly on the cooling conduit 10.

Fig. 4 shows a sectional view of an electric battery 100 according to an example embodiment of the present invention. In the shown embodiment, a cooling system 1 as depicted in figs. 2-3 is used for a plurality of battery cells C1,..., Cn. The electric battery 100 comprises a plurality of variable cooling conduits 10,..., 10n. Each one of the plurality of variable cooling conduits 10,..., 10n is associated with at least one respective battery cell C1,..., Cn. For example, each cooling conduit 10,..., 10n may be connected to each respective battery cell C1,..., Cn by at least one of the following: glue, a spring, a clip.

The plurality of variable cooling conduits 10,..., 10n may be associated with a first group of battery cells. The cooling system 1 may further comprise one or more non-variable cooling conduits (not shown) associated with a second group of battery cells (not shown). The first group of battery cells may be at least one of the following: battery cells in a corner of the electric battery 100, battery cells at a front portion of the electric battery 100 and battery cells at a top portion of the electric battery 100.

It is to be understood that the present invention is not limited to the embodiments described above and illustrated in the drawings; rather, the skilled person will recognize that many changes and modifications may be made within the scope of the appended claims.

## Claims

1. A cooling system (1) for one or more battery cells (C1,...,Cn) of an electric battery (100), comprising:
- a cooling conduit (10) for coolant fluid, wherein the cooling conduit (10) is arranged for cooling of at least one battery cell (C1) of the electric battery (100), **characterized in that**, the cooling conduit (10) has a variable dimension being indicative of a variable amount of coolant fluid to flow in the cooling conduit (10), and
the variable dimension of the cooling conduit (10) is variable in dependence on a cell swelling mechanism of the at least one battery cell (C1).

2. The cooling system (1) according to claim 1, wherein the variable dimension of the cooling conduit (10) is variable so that it increases with increased cell swelling of the at least one battery cell (C1), wherein an increase of the variable dimension is indicative of an increased flow amount of coolant fluid in the cooling conduit (10).

3. The cooling system (1) according to any one of the preceding claims, further comprising a main channel (12) for coolant fluid, wherein the cooling conduit (10) is in fluid communication with the main channel (12) or fluidly connectable with the main channel (12) in dependence on the cell swelling mechanism.

4. The cooling system (1) according to claim 3, wherein the fluid communication between the main channel (12) and the cooling conduit (10) is provided in that the cooling conduit (10) is at least partly provided inside the main channel (12).

5. The cooling system (1) according to claim 4, when also being dependent to claim 2, wherein the increase of the variable dimension is achieved by the cooling conduit (10) being pressed further into the main channel (12) as a consequence of the cell swelling.

6. The cooling system (1) according to claim 5, wherein the increase of the variable dimension is configured to be performed in a direction (d1) which is different from a flow direction (d2) of the coolant fluid in the main channel (12), such as substantially perpendicular to the flow direction of the coolant fluid in the main channel (12).

7. The cooling system (1) according to any one of the preceding claims, wherein the at least one battery cell (C1) which is associated with the cooling conduit (10') has a bottom surface (14), a top surface (16) and a side surface (18), wherein the variable dimension of the cooling conduit (10') is variable in dependence on a cell swelling mechanism occurring at the side surface (18) of the at least one battery cell (C1).

8. The cooling system (1) according to any one of the preceding claims, wherein the at least one battery cell (C1) which is associated with the cooling conduit (10) has a bottom surface (14), a top surface (16) and a side surface (18), wherein the variable dimension of the cooling conduit (10) is variable in dependence on a cell swelling mechanism occurring at the bottom and/or top surface (14, 16) of the at least one battery cell (C1).

9. The cooling system (1) according to any one of the preceding claims, wherein the dimension change of the variable dimension is configured to be performed by the at least one battery cell (C1) pushing directly or indirectly on the cooling conduit (10, 10').

10. An electric battery (100) comprising one or more battery cells (C1,..., Cn), and further comprising a cooling system (1) according to any one of claims 1-9.

11. The electric battery (100) according to claim 10, wherein the cooling conduit (10) is connected to the at least one battery cell (C1,..., Cn) by at least one of the following: glue, a spring, a clip.

12. The electric battery (100) according to claim 10 or 11, wherein the cooling system (1) comprises a plurality of variable cooling conduits (10,...,10n), each one being associated with at least one respective battery cell (C1,...,Cn).

13. The electric battery (100) according to claim 12, wherein the plurality of variable cooling conduits are associated with a first group of battery cells and wherein the cooling system (1) further comprises one or more non-variable cooling conduits associated with a second group of battery cells, wherein the first group of battery cells is at least one of the following: battery cells in a corner of the electric battery (100), battery cells at a front portion of the electric battery (100) and battery cells at a top portion of the electric battery (100).

14. A vehicle (200) comprising an electric battery (100) according to any one of claims 10-13.
